# EUROPÄISCHE PATENTSCHRIFT

(11) **EP 0 515 792 B1**
(45) Veröffentlichungstag und Bekanntmachung des Hinweises auf die Patenterteilung: **20.05.1998**
(21) Anmeldenummer: 92104947.4
(22) Anmeldetag: 21.03.1992
(51) Int. Cl.: B09B 3/00

(54) **Verfahren zum Behandeln von Rückständen einer Abfallverbrennungsanlage und Abfallverbrennungsanlage zur Durchführung des Verfahrens**
Method for treating residues from a waste incineration plant and waste incineration plant for carrying out said method
Procédé pour le traitement des résidus d'une installation d'incinération de déchets, et installation d'incinération de déchets pour la mise en oeuvre dudit procédé

(30) Priorität: 28.05.1991 DE 4117444
(43) Veröffentlichungstag der Anmeldung: 02.12.1992
(73) Patentinhaber: DEUTSCHE BABCOCK ANLAGEN GMBH, 46003 Oberhausen (DE)
(72) Erfinder: Schneider, Dietmar, Dr., W-4000 Düsseldorf 30 (DE); Horch, Klaus, Dr., W-4152 Kempen (DE)
(74) Vertreter: Radünz, Ingo

(56) Entgegenhaltungen:
- EP-A- 0 086 858
- EP-A- 0 335 033
- EP-A- 0 373 557
- EP-A- 0 417 520
- EP-A- 0 437 679
- WO-A-90/03856
- PATENT ABSTRACTS OF JAPAN vol. 13, no. 546 (C-661) 6. Dezember 1989 & JP-A-01 224 084 (TAKAO KATSUMI) 7. September 1989

## Beschreibung

Die Erfindung betrifft ein Verfahren zum Behandeln von Rückständen einer Abfallverbrennungsanlage gemäß dem Oberbegriff des Anspruchs 1 und eine Abfallverbrennungsanlage zur Durchführung dieses Verfahrens gemäß dem Oberbegriff des Anspruchs 9.

In Abfallverbrennungsanlagen fallen als feste Rückstände
- Rostasche (Rostabwurf und Rostdurchfall) hinter und unter dem Verbrennungsrost,
- Kesselasche in den Rauchgaszügen und
- Filterstaub bei der Rauchgasreinigung an.

Diese Rückstände enthalten folgende Stoffe, die ihre Verwertbarkeit stark beeinträchtigen:
- unverbrannten Kohlenstoff,
- lösliche Metalle und deren Verbindungen,
- halogenierte Kohlenwasserstoffe, wie z.B. Dioxine, Furane und deren Vorläufer.

Der Anteil dieser unerwünschten Inhaltsstoffe ist bei der Rostasche geringer als bei den beiden anderen Rückständen. Er nimmt mit fallendem Korndurchmesser der Rückstände zu.

Es ist derzeit noch üblich, die Rostasche auf Hausmüll- oder Monodeponien abzulagern oder z.B. im Straßenbau wiederzuverwerten. Die Filterstäube werden dagegen in Sonderdeponien abgelagert. Vor der Lagerung werden sie in immer größerem Maße behandelt.

Zu den Behandlungsmethoden des Flugstaubes gehören z.B. die thermische Behandlung unter Sauerstoffmangel zum Abbau der halogenierten Kohlenwasserstoffe (DE-OS 37 03 984) und das sogenannte 3R-Verfahren, bei dem der Flugstaub mit Waschwasser einer Waschanlage für Rauchgas zum Abbau von Metallen behandelt wird und ggf. der gewaschene Flugstaub in den Verbrennungsraum zurückgeführt wird (DE-OS 33 20 466).

Außerdem sind verschiedene Einschmelzverfahren bekannt. Die DE-OS 37 16 231 betrifft z.B. ein Verfahren, bei dem der Flugstaub zum Abbau von Metallen und toxischen Kohlenwasserstoffen mit einem Plasmabrenner eingeschmolzen wird.

Kesselasche wird meist mit der Rostasche abgezogen. Sie ist jedoch wegen ihrer kleinen Korndurchmesser problematischer.

Zur Behandlung der Rostasche ist aus der EP-A2 241 635 bekannt, die Feinfraktion (kleiner 0,8 mm) abzutrennen und die Grobfraktion wieder zu verwenden.

Der Wiederverwertung und der Deponierung der Rostasche und ggf. Kesselasche wird jedoch wegen der wasserlöslichen, teilweise toxischen Inhaltsstoffe immer mehr Widerstand entgegengesetzt.

Ein Verfahren und eine Vorrichtung zur Behandlung von sogenannter Schlacke (Rostasche) und sogenannter Flugasche (Kesselasche und Filterstaub) werden von H. Ruegg (Schlackenschmelzanlage in: Thomé-Kozmiensky, K.J. (Hrsg.) Recycling Berlin '79, Band 1, EF-Verlag, Berlin 1979, S. 571 - 574) beschrieben. Dabei fällt die Schlacke von einem Rost einer Müllverbrennungsanlage direkt in eine Schmelzkammer, von wo sie mittels eines mit Luft betriebenen Ölbrenners abgeschmolzen wird. Die flüssige Schlacke rinnt in ein Wasserbad. Außerdem kann die Flugasche in einer Brennkammer mit einem Brenner geschmolzen werden. Die geschmolzene Flugasche gelangt ebenfalls ins Wasserbad. Die Rauchgase werden in den Feuerraum geleitet.

Die Brennkammer, die Schmelzkammer und das Wasserbad dieser Schlackenschmelzanlage sind zum Feuerraum hin offen, was zu einem schlechten Wirkungsgrad der durch die Brenner eingebrachten Energie führt. Ein Nachteil ist auch, daß die Verweilzeit der Rückstände in den Schmelzräumen nicht kontrollierbar ist. Ein sicheres Einschmelzen der Rückstände, der vollständige Ausbrand sowie der Abbau der halogenierten Kohlenwasserstoffe kann daher nicht gewährleistet werden.

Aus der WO 90/03856 ist ein Verfahren und eine Vorrichtung zum Aufbereiten von Schlacken und anderen Verbrennungsrückständen aus Abfallverbrennungsanlagen mit einem separaten Schmelzofen bekannt. Die Schlacken und andere Verbrennungstückstände werden in einer Vorwärmeinrichtung erwärmt und in den Schmelzofen eingebracht. Aus dem Schmelzofen wird die Schlacke in eine Kühlvorrichtung geführt.

In einem separaten Schmelzofen kann die Verweilzeit der Rückstände im Schmelzbad besser kontrolliert werden und damit der Ausbrand des unverbrannten Kohlenstoffs und der Abbau der halogenierten Kohlenstoffe sichergestellt werden. Es werden jedoch nur die Metalle mit hohem Dampfdruck, die während des Schmelzens verdampfen und mit dem Abgas des Schmelzofens ausgetragen werden, von den Rückständen getrennt. Die restlichen Metalle verbleiben, je nach Schmelzpunkt und Verweilzeit, in flüssiger oder in fester Form in der Schmelze und beeinträchtigen die Verwertbartkeit des aus dem Schmelzofen abgezogenen Produktes.

Ein gattungsgemäßes Verfahren und eine gattungsgemäße Vorrichtung zur Behandlung von Rückständen ist aus der EP-A1 0417520 bekannt. Bei diesem Verfahren zur umweltschonenden Beseitigung von umweltgefährdenden Rückständen, insbesondere von Klärschlamm, Filterstaub, Flugasche und Schlacke, werden die getrockneten Rückstände mit Hochofenschlacke gemischt und homogenisiert in einem zweigeteilten Schmelzofen zu einerglasartigen Masse verschmolzen und über einen Überlauf kontinuierlich abgezogen. Die sich in der Schmelze bildenden Metalle sinken zu Boden und werden abgezogen.

Bei diesem Verfahren werden neben den zu behandelnden Rückständen große Mengen an Hochofenschlacke, beispielsweise bei der Entsorgung von Klärschlamm im Verhältnis 1 : 1 bis 1 : 3 oder darüber, eingesetzt. Dies führt zu großen Mengen einzuschmelzenden Materials. Der eingesetzte, zweigeteilte Schmelzofen wird mit einer geschlossenen Aufgabegutdecke und unter Glasgallebildung betrieben. Bei Glasgallenbildung lassen sich geringe Chlor-, und im größeren Umfang Schwefelrückstände in der Schmelze, die die Qualität des Schmelzproduktes beeinträchtigen, nicht vermeiden. Die Glasgalle muß außerdem aufwendig entsorgt werden.

Aufgabe der Erfindung ist es, ein einfaches Verfahren zur Behandlung von Rückständen gemäß dem Oberbegriff des Anspruchs 1, insbesondere von Rückständen aus Abfallverbrennungsanlagen, und eine Abfallverbrennungsanlage mit einem Kessel, einer Rauchgasreinigungsanlage und einer entsprechenden Vorrichtung zur Behandlung von Rückständen gemäß dem Oberbegriff des Anspruchs 9 mit einem einfachen Schmelzofen zu entwicklen, wobei verwertbare Produkte verbesserter Qualität erzeugt werden.

Die Aufgabe ist durch die kennzeichnenden Merkmale der Ansprüche 1 und 9 gelöst.

Bei dem erfindungsgemäßen Verfahren werden die Rückstände einer Abfallverbrennungsanlage, wie Rostasche ggf. nach Aussortieren größerer Teile, Kesselasche, Filterstaub, ggf. auch beladenes Absorbens, das z. B. aus einem am Ende der Rauchgasreinigung angeordneten Filterbett oder Gewebefilter abgezogen wird, aber auch andere Rückstände, wie z. B. die Asche einer Klärschlammverbrennungsanlage oder -Pyrolyseanlage, gesammelt.

Die Rückstände werden gemeinsam in einen separaten Schmelzofen gefördert, in dem sie unter Zufuhr von Energie kontinuierlich eingeschmolzen werden.

Der Einsatz verschiedener Rückstände einer Abfallverbrennungsanlage, zumindest von Rostasche, Kesselasche und Filterstaub, ermöglicht ein Einschmelzen der Rückstände ohne Zusatz von großen Mengen Hochofenschlacke. Die einzuschmelzende Menge an Rückständen ist wesentlich kleiner als sie es bei einem aus der EP-A1 041520 bekannten Verfahren ist.

Oberhalb des Schmelzbades wird, z. B. durch Zufuhr der Schmelzenergie durch Brenner, eine um 100 bis 300°C höhere Temperatur als im Schmelzbad eingestellt. Bei diesem Einschmelzen mit heißem Oberofen, wobei die Gewölbetemperaturen bis zu 1700°C erreichen, entsteht keine schwer zu entsorgende Glasgalle auf der Oberfläche des Schmelzbades. In diesem heißen Oberofen werden auch sämtliche organische Verbindungen im Abgas des Schmelzbades zerstört.

Eine kleinere Menge einzuschmelzender Rückstände und das Einschmelzen mit heißem Oberofen ermöglichen den Einsatz eines Schmelzofens einfacher Bauart, beispielsweise eines einteiligen Schmelzofens mit einem Schmelzbad.

Aus dem Schmelzofen werden getrennt eine mit Metallen angereicherte Schmelze und eine Restschmelze abgezogen und abgekühlt. Die Abgase des Schmelzofens können dem Rauchgas der Abfallverbrennungsanlage vor der Rauchgasreinigungsanlage, vorzugsweise im Feuerraum, zugeführt werden.

Durch den heißen Oberofen wird der in den Rückständen enthaltene Schwefel ausgetrieben und bei Rückführung des Abgases vor der Rauchgasreinigungsanlage bei der Rauchgasentschwefelung als Produkt, z. B. als Gips, ausgetragen. Ebenso wird Chlor aus der Schmelze ausgetrieben und bei der Rauchgaswäsche ausgetragen.

Ein wesentlicher Vorteil des erfindungsgemäßen Verfahrens ist, daß man aus der Restschmelze eine völlig glasartige Schlacke erhält. Aus dieser Schlacke sind der unverbannte Kohlenstoff, die halogenierten Kohlenwasserstoffe, im wesentlichen die Metalle und Metallverbindungen und Schwefel und Chlor bzw. deren Verbindungen entfernt. Restliche Schadstoffe sind in der glasartigen Matrix der Schlacke eingebunden. Diese glasartige Schlacke kann wiederverwendet oder auf Boden- oder Mineralstoffdeponien abgelagert werden. Die neben der glasartigen Schlacke abgezogene, mit Metallen angereicherte Schlacke, kann einer Aufbereitung zugeführt werden. Bei der Behandlung der Rückstände entstehen daher nur Produkte, nämlich die glasartige Schlacke und die mit Metallen angereicherte Schlacke, die wiederverwendet werden können. Die Qualität der glasartigen Schlacke ist durch die Entfernung von Schwefel und Chlor verbessert. Es entsteht keine aufwendig zu entsorgende Glasgalle.

Die mit Metallen angereicherte Schmelzen wird am Boden des Schmelzofens abgezogen und die Restschmelze wird an einer Seitenwand des Schmelzofens auf Höhe einer Oberfläche des Schmelzbades aus dem Schmelzofen abgezogen. Die sich wegen ihres höheren spezifischen Gewichtes im unteren Teil des Schmelzbades ansammelnden Metalle lassen sich auf diese Weise einfach von der Restschmelze abtrennen.

Bei einer Variante des erfindungsgemäßen Verfahrens wird gemäß Anspruch 2 nur die Restschmelze kontinuierlich abgezogen. Der diskontinuierliche Abzug der mit Metallen angereicherten Schmelze rmöglicht eine größere Öffnung, durch die auch größere, nicht geschmolzene, Metallteile abgezogen werden könnne.

Bei einem Verfahren gemäß Anspruch 3 werden die Rückstände bei einer Temperatur von 1100 bis 1500°C, insbesondere zum sicheren Ausbrand und Abbau der halogenierten Kohlenwasserstoffe bei 1300 bis 1500°C, im Schmelzbad eingeschmolzen.

Eine zusätzliche Erwärmung des unteren Teiles des Schmelzbades gemäß Anspruch 4 bei einem Schmelzofen mit heißem Oberofen, bei der etwa 2 bis 10 % der Energie zugeführt wird, ermöglicht ein gleichmäßigeres und sicheres Einschmelzen, da die Erwärmung tieferer Schichten eine leichte Mischströmung erzeugt. Ebenso verbessert die Zufuhr von Verwirbelungsluft im unteren Teil des Schmelzbades durch Turbulenzen und Rückströmungen den Schmelzprozeß.

Wesentlicher Vorteil der Entfernung der Grobfraktion aus der Rostasche, wobei die verbleibende Feinfraktion einen maximalen Korndurchmesser von 30 bis 50 mm aufweist, ist die Entfernung von Eisenschrott, der in der Grobfraktion überproportional enthalten ist. Damit wird verhindert, daß sich größere, unschmelzbare Eisenteile am Boden des Schmelzofens ansammeln und das Abziehen der mit Metallen angereicherten Schmelze behindern. Die Begrenzung der Rückstände auf einen maximalen Korndurchmesser von 30 bis 50 mm vereinfacht auch das Sammeln und Zuführen der Rückstände in den Schmelzofen.

Durch die Entfernung von Eisenschrott aus der Grobfraktion der Rostasche, z.B. durch einen Magnetscheider, und die Rückführung der restlichen, einen verhältnismäßig hohen Anteil an Unverbranntem enthaltenden Grobfraktion, nach Zerkleinerung, in den Kessel, entsteht aus der Grobfraktion ein wiederverwertbares Produkt, nämlich Eisenschrott.

Die teilweise Entfernung von Metallen, vorwiegend mit hohem Dampfdruck, aus dem Flugstaub, bevor er mit den anderen Rückständen eingeschmolzen wird, verhindert eine größere Anreicherung der Metalle, die im Schmelzofen abdampfen, in der Abfallverbrennungsanlage. Die Entfernung der Metalle aus dem Filterstaub kann z.B. durch Waschen mit Waschwasser eines Rauchgaswäschers durchgeführt werden, wobei gerade Metalle mit hohem Dampfdruck, wie Cd und Zn, mit einem hohen Wirkungsgrad ausgewaschen werden.

Durch das Einschmelzen auch der feuchten Rückstände, z.B. der Rückstände der Abwasseraufbereitung, einer Abfallverbrennungsanlage neben den festen Rückständen können im wesentlichen alle Rückstände der Abfallverbrennungsanlage in wiederverwertbare Produkte umgesetzt werden.

Das zusätzliche Einschmelzen von glasbildenden Rückständen, wie z. B. Altglas oder Sand einer Wirbelschicht, verbessert die Qualität der glasartigen Schlacke.

Eine Abfallverbrennungsanlage mit einem Kessel, einer Rauchgasreinigungsanlage und einer Vorrichtung zum Behandeln von Rückständen gemäß Anspruch 9 eignet sich besonders gut zur Durchführung eines der Verfahren nach Anspruch1 bis Anspruch 8.

In der Sammelvorrichtung können die verschiedenen Rückstände der Abfallverbrennungsanlage, zumindest Rostasche, Kesselasche und Flugstaub, gesammelt werden und von dort in den Schmelzofen gefördert und eingeschmolzen werden.

Der Schmelzofen ist als einteiliger Wannenschmelzofen ausgebildet. Er ist wesentlich einfacher aufgebaut als der in der EP-A1 0417520 beschriebene Schmelzofen. Ein Schmelzofen mit nur einem Schmelzbad führt zu einer verbesserten Durchmischung der Schmelze und damit zu einem gleichmäßigeren Schmelzprodukt, d.h. einer gleichmäßigeren glasartigen Schlacke.

Im oberen Drittel des Schmelzofens sind Brenner einander gegenüber angeordnet. Sie können als mit Erdgas betriebene Gas/Sauerstoffbrenner oder als Luftbrenner ausgebildet sein. Beim Einschmelzen in einen solchen Schmelzofen, der mit heißem Oberofen betrieben wird, entsteht keine schwer zu entsorgende Glasgalle. Außerdem werden die restlichen organischen Verbindungen im Abgas des Schmelzbades zerstört.

Die Abfallverbrennungsanlage mit der erfindungsgemäßen Vorrichtung zum Behandeln von Rückständen gemäß Anspruch 9 ermöglicht mit einem besonders einfach aufgebauten Schmelzofen ein Einschmelzen der Rückstände der Abfallverbrennungsanlage, zumindest der Rostasche, der Kesselasche und des Flugstaubs, gemäß eines Verfahrens nach Anspruch 1, bei dem nur eine glasartige, wiederverwendbare Schlacke und eine ebenfalls wiederverwendbare, mit Metallen angereicherte, Schlacke erzeugt wird.

Die Qualität der glasartigen Schlacke ist durch den Einsatz eines heißen Oberofens und die damit verbundene Entfernung von Schwefel, Chlor und deren Verbindungen verbessert. Eine aufwendig zu entsorgende Glasgalle fällt nicht an.

Die Anordnung der Öffnungen im Boden und einer Wand des Schmelzofens ist besonders gut zur Durchführung eines Verfahrens nach Anspruch 2 und die Installation einer elektrischen Zusatzheizung besonders gut zur Durchführung des Verfahrens nach Anspruch 4 geeignet.

Durch den Einsatz von Gas/Sauerstoffbrennern wird die Abgasmenge des Schmelzbades gering gehalten.

Als einfache Zusatzheizung werden in den Schmelzraum ragende Elektroden, z. B. Molybdänelektroden, verwendet.

Verwirbelungsdüsen im unteren Teil des Schmelzraumes, z. B. im Boden, sind besonders gut zur Durchführung eines Verfahrens nach Anspruch 6 und die Anordnung einer Trennvorrichtung mit einer Durchlässigkeit von 30 bis 50 mm, die eine Grobfraktion von einer Feinkraktion mit einem maximalenn Durchmesser von 30 bis 50 mm trennt, ist besonders gut zur Durchführung eines Verfahrens nach Anspruch 5 geeignet. Ein Schwingsieb ist eine einfache Trennvorrichtung.

Die Sammelvorrichtung weist einen Vorlagebunker auf, in den die verschiedenen Rückstände gefördert werden, und eine Einlegemaschine, durch die sie in den Schmelzofen eingebracht werden, auf. Eine einfache Ausführung der Einlegemaschine sind wassergekühlte Vibrationsrohre.

Ein Schleusensystem mit Absperrschiebern ist eine einfache Anordnung zur Abdichtung des Feuerraumes. Sie ermöglicht trockene Entaschung.

Mit Hilfe der Umleitschurre kann, z.B. bei Stillstand des Schmelzofens, die gesamte Rostasche in einem trockenen Aschebunker zwischengelagert werden. Sie erhöht die Betriebssicherheit der Abfallverbrennungsanlage.

Die Anordnung der Umleitschurre hinter einem trockenen Entascher führt zu kühleren Rückständen im Normalbetrieb. Dies verringert den apparativen Aufwand und ermöglicht weitere Aussortierung von z.B. Fe-Schrott oder NE-Metallen.

Die Erfindung wird anhand mehrerer, in der Zeichnung schematisch dargestellter Beispiele weiter erläutert.

Figur 1 zeigt ein vereinfachtes Fließbild einer Abfallverbrennungsanlage des ersten Beispiels und Figur 2 ein Fließbild einer Abfallverbrennungsanlage des zweiten Beispiels.

In Figur 3 ist die Vorrichtung zum Behandeln der Rückstände dargestellt. Figur 3 zeigt einen vertikalen Querschnitt durch den Schmelzofen.

Figur 4 zeigt einen Ausschnitt des Fließbildes der Abfallverbrennungsanlage des Beispiels 3.

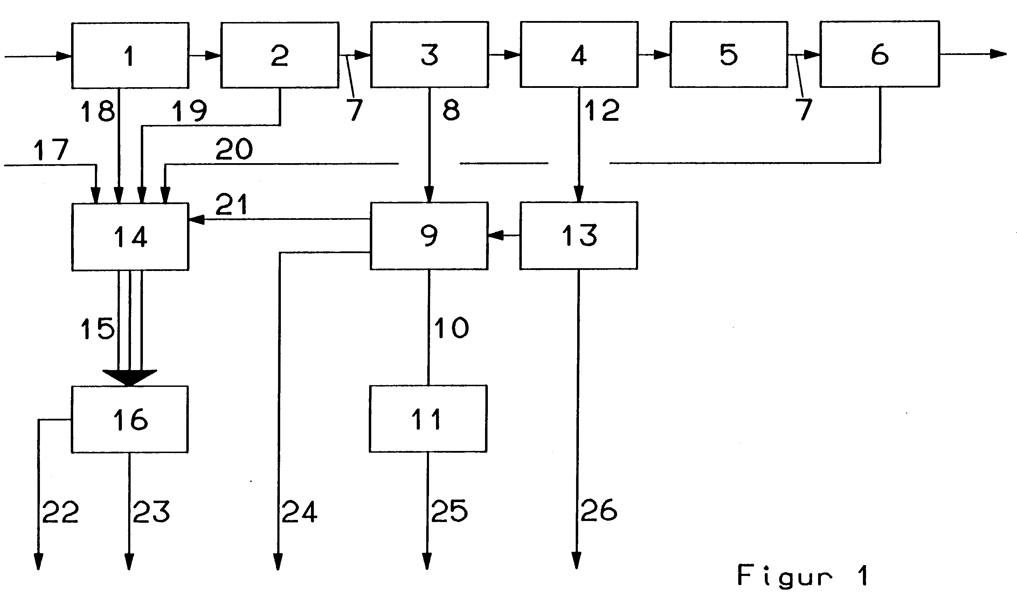

### Beispiel 1 (Figur 1):

Eine Abfallverbrennungsanlage weist einen Kessel 1, eine Rauchgasreinigungsanlage sowie eine Anlage zur Behandlung von Rückständen auf. Ausgehend vom Kessel 1 sind in der Rauchgasreinigungsanlage ein Elektrofilter 2, zwei Wäscher 3 und 4, ein Katalysator 5 und ein Gewebefilter 6 hinterenandergeschaltet und durch Rauchgaskanäle 7 miteinander verbunden. Zur Rauchgasreinigungsanlage gehören auch eine über eine Leitung 8 an den ersten Wäscher 3 angeschlossene Abwasserreinigungsanlage 9, eine über eine Leitung 10 an diese angeschlossene HCl-Rektifikationsanlage 11 sowie eine über eine Leitung 12 an den zweiten Wäscher 4 angeschlossene Entwässerungsvorrichtung 13.

Die Anlage zur Behandlung von Rückständen weist eine Sammelvorrichtung bestehend aus einem Vorlagebunker 14 und einer Einlegemaschine 15 und einem Schmelzofen 16 auf.

Die Einlegemaschine 15 verbindet den Vorlagebunker 14 mit dem Schmelzofen 16.

In den Vorlagebunker 14 mündet eine Leitung 17 zur Zufuhr von glasbildenden Rückständen, z.B. Altglas oder Sand, eine mit dem Kessel 1 verbundene Leitung 18 zur Zufuhr von Rost- und Kesselasche, eine mit dem Elektrofilter 2 verbundene Leitung 19 zur Zufuhr von Flugstaub, eine mit dem Gewebefilter 6 verbundene Leitung 20 zur Zufuhr von beladenem Adsorbens sowie eine mit der Abwasserreinigungsanlage verbundene Leitung 21 zur Zufuhr ihrer feuchten Rückstände.

An dem Schmelzofen 16 ist eine Leitung 22 zur Abfuhr einer Restschmelze und eine Leitung 23 zur Abfuhr einer mit Metallen angereicherten Schmelze angeschlossen.

Außerdem ist an die Abwasserreinigungsanlage 9 eine Leitung 24 zur Abfuhr von Quecksilber, an die HCl-Rektifikationsanlage 11 eine Leitung 25 zur Abfuhr von Salzsäure (HCl) und an die Entwässerungsvorrichtung 13 eine Leitung 26 zur Abfuhr von Gips (CaSO₄) angeschlossen.

Im Betrieb wird der dem Kessel 1 zugeführte Abfall unter Luftzufuhr verbrannt. Das dabei entstehende Rauchgas durchströmt nacheinander die Komponenten der Rauchgasreinigungsanlage. Dabei wird zunächst im Elektrofilter 2 der Flugstaub entfernt. Anschließend wird im ersten Wäscher 3 HCl und HF und im zweiten Wäscher 4 unter Zusatz von z.B. Kalk SO₂ ausgewaschen. Darauf folgt die Entfernung von NOx in einem Katalysator 5 und die Entfernung restlicher Schadstoffe in einem mit einer Filterschicht versehenen Gewebefilter 6. Die Filterschicht wird durch Zufuhr eines Adsorbens, z.B. einer Mischung aus Kalk und Aktivkohle, vor dem Gewebefilter 6 erzeugt.

Vom aus dem ersten Wäscher 3 ausgeschleusten Waschwasser wird in der Abwasserreinigungsanlage durch lonentausch ein Quecksilberstrom abgetrennt, der durch die Leitung 24 ausgeführt wird. Ein mit HCl angereicherter Teilstrom wird über die Leitung 10 zur HCl-Rektifikationsanlage 11 geleitet, aus der z.B. 30 %-ige Salzsäure über die Leitung 25 ausgeführt wird.

Das aus dem zweiten Wäscher 4 ausgeschleuste gipshaltige Waschwasser wird der Entwässerungsvorrichtung 13 zugeführt, aus der der Gips über die Leitung 26 abgeführt wird. Fällt bei der Entwässerung Filtrat an, so kann das Filtrat der Abwasserreinigungsanlage 9 zugeführt werden (gestrichelter Pfeil).

Die Rückstände der Abwasserreinigungsvorrichtung werden auf eine Feuchte zwischen 30 und 90 % entwässert und über die Leitung 21 dem Vorlagebunker 14 zugeführt.

Neben der Rost- und Kesselasche aus dem Kessel 1 über die Leitung 18 und dem Flugstaub aus dem Elektrofilter 2 über die Leitung 19 wird dem Vorlagebunker 14 außerdem aus dem Gewebefilter 6 abgezogenes, mit Reststaub und restlichen Schadstoffen beladenes Adsorbens über die Leitung 20 und ggf. glasbildende Rückstände, wie Altglas, Sand, über die Leitung 17 zugeführt.

Die im Vorlagebunker 14 gesammelten Rückstände werden dem Schmelzofen 16 gemeinsam über die Einlegemaschine 15 zugeführt.

Im Schmelzofen 16 werden die Rückstände bei einer Schmelzbadtemperatur von 1300 bis 1500 °C und einer um 100 bis 300 °C höheren Temperatur oberhalb des Schmelzbades eingeschmolzen. Die Verweilzeit der Rückstände beträgt 5 bis 24 Stunden im Schmelzbad. Sie kann auch länger sein, wenn der Nachschub unterbrochen ist.

Aus dem Schmelzofen 16 wird über die Leitung 22 eine Restschmelze und über die Leitung 23 eine mit Metallen angereicherte Schmelze abgezogen. Bei der Abkühlung der Restschmelze entsteht eine völlig glasartige Schlacke, aus der der unverbrannte Kohlenstoff, die halogenierten Kohlenstoffe, aber auch Schwefel, Chlor usw. und die Metalle und Metallverbindungen entfernt sind.

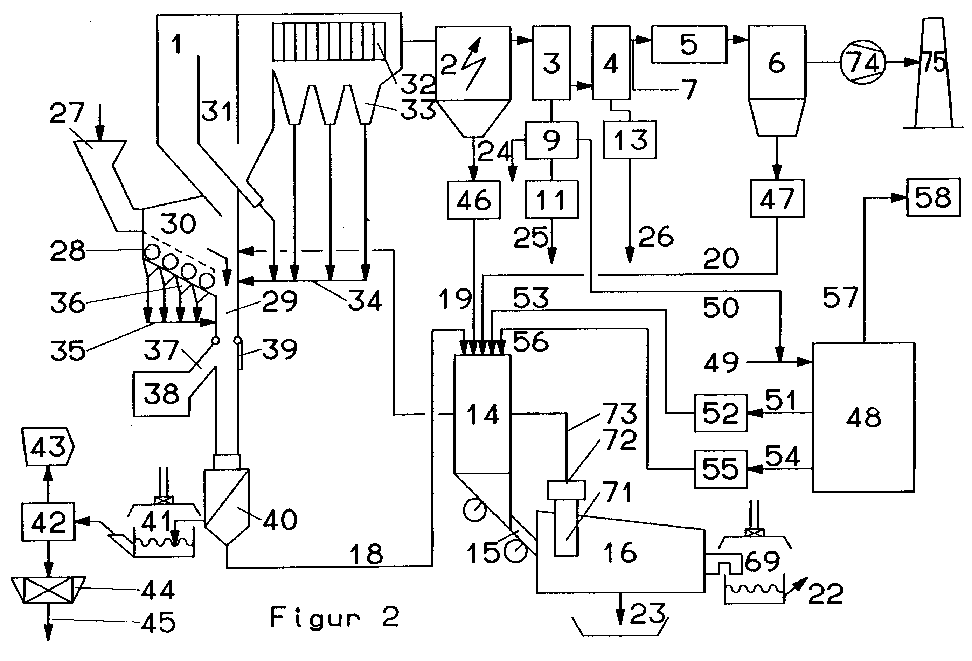

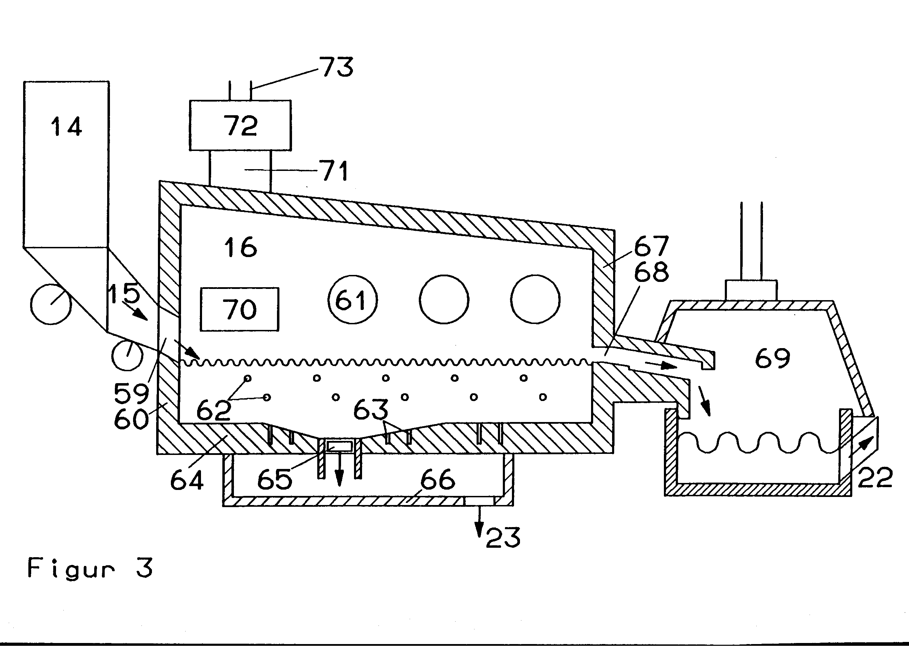

### Beispiel 2 (Figuren 2 und 3):

Anhand von Beispiel 2 wird die Erfindung, insbesondere die Anlage zur Behandlung der Rückstände, weiter erläutert. Eine Abfallverbrennungsanlage des Beispiels 2 weist ebenfalls die in Beispiel 1 beschriebenen Komponenten auf. Sie unterscheidet sich zunächst nurdarin, daß die Abwasserreinigungsanlage 9 nicht mit dem Vorlagebunker 14 verbunden ist.

Der Kessel 1 ist mit einer Vorrichtung 27 zur Aufgabe von Abfall, einem aus vier bis sechs Walzen 28 bestehenden Walzenrost, einem Ascheschacht 29 und einem Feuerraum 30, mehreren Rauchgaszügen 31 und im Rauchgasstrom liegenden Rohrbündeln 32 versehen. Die Rauchgaszüge 31 sind mit Sammelvorrichtungen 33 für die Kesselasche, die in eine an den Ascheschacht 29 angeschlossene Förderleitung 34 münden, versehen.

Der Ascheschacht 29 beginnt seitlich der in Bewegungsrichtung des Abfalls letzten Walze 28 des Walzenrostes und setzt sich nach unten fort. Er erstreckt sich über die gesamte Länge der Walzen 28. In den Ascheschacht 29 mündet unterhalb des Walzenrostes 29 eine Förderleitung 35, an die Sammelvorrichtungen 36 für Rostdurchfall angeschlossen sind. Unterhalb dieses Anschlusses ist im Ascheschacht ein in der Zeichnung nicht dargestelltes, gasdichtes Schleusensystem angeordnet.

Vom Ascheschacht 29 zweigt unterhalb des Schleusensystems ein Ascheschacht 37 ab, der in einen trockenen Entascher 38, der ggf. auch als Aschebunker ausgebildet ist.
Auf Höhe der Abzweigung des Ascheschachtes 37 vom Ascheschacht 29 ist eine motorbetriebene, schwenkbare Umleitschurre 39 angebracht. In ausgeschwenktem Zustand verschließt sie den Ascheschacht 29 und leitet die Rostasche über den Ascheschacht 37 in den Entascher 38. Im Ausgang des Ascheschachtes 29 befindet sich ein Schwingsieb 40 mit einer Maschenweite von 40 mm, dessen Grobgutausgang mit einem Naßentascher 41 mit Brüdenabsaugung verbunden ist und dessen Feingutausgang über die Leitung 18 zum Vorlagebunker 14 führt. Der Ausgang des Naßentaschers 41 ist mit einem Magnetscheider 42, z.B. einem Bandförderer mit einem Überband-Magnetscheider, verbunden. Am Magnetscheider 42 ist ein Eisenschrott-Container 43 und für die nichtmagnetische Grobfraktion eine Zerkleinerungsvorrichtung 44 mit einer Leitung 45, die in die Vorrichtung 27 zur Aufgabe des Abfalls mündet, angeschlossen.

In der Leitung 19, die das Elektrofilter 2 mit dem Vorlagebunker 14 verbindet, befindet sich ein Silo 46. Ebenso befindet sich in der Leitung 20, die das Gewebefilter 6 mit dem Vorlagebunker 14 verbindet, ein Silo 47.

Der Abfallverbrennungsanlage ist außerdem eine Klärschlammverbrennungsanlage zugeordnet. Wesentliche Komponente der Klärschlammverbrennungsanlage ist ein Wirbelschichtreaktor 48, an den eine Klärschlammzuleitung 49 angeschlossen ist. In diese Klärschlammzuleitung 49 mündet vor den Entwässerungsvorrichtungen eine von der Abwasserreinigungsanlage 9 ausgehende Leitung 50. Eine Ascheleitung 51 des Wirbelschichtreaktors 48 führt zu einem Silo 52, das über eine Leitung 53 mit dem Vorlagebunker 14 verbunden ist. Auch eine Sandausfuhrleitung 54 des Wirbelschichtreaktors 48 führt zu einem Silo 55, das ebenfalls über eine Leitung 56 mit dem Vorlagebunker 14 verbunden ist. Eine Abgasleitung 57 des Wirbelschichtreaktors 48 führt zu einer eigenen Abgasreinigungsanlage 58.

Der Vorlagebehälter 14 weist ein senkrecht angeordnetes, quaderförmiges Gehäuse auf. Der Boden des Vorratsbehälters 14 verläuft schräg und ist mit einer Vibrationseinrichtung verbunden. Die Einlegemaschine 15 besteht aus wassergekühlten Einlegetischen, die sich an die durch den Boden gebildete Schräge anschließen und in Öffnungen 59 in einer Seitenwand 60 des Schmelzofens 16 münden.

Der Schmelzofen 16 ist ein sogenannter Wannenschmelzofen, dessen isoliertes Gehäuse einen rechteckigen, horizontalen Querschnitt und einen annähernd rechteckigen, vertikalen Querschnitt aufweist, wobei die Decke des Schmelzofens 16 ausgehend von der Seitenwand 60 leicht schräg nach unten verläuft.

Im oberen Drittel des Schmelzraumes, d.h. des Innenraumes des Schmelzofens 16, befinden sich zwei bis zehn wassergekühlte, mit Erdgas betriebene Gas/Sauerstoffbrenner 61. In Beispiel 2 sind jeweils drei Brenner einander gegenüber auf den senkrecht zur Seitenwand 60 verlaufenden, längeren Seitenwänden angeordnet. Von diesen Seitenwänden ragen im unteren Drittel des Schmelzraumes, je nach gewünschter elektrischer Energiezufuhr, 2 bis 30 Molykdänelektroden 62 in den Schmelzraum. Außerdem sind Verwirbelungsdüsen 63 im Boden 64 des Schmelzofens 16 eingelassen. In der an die Seitenwand 60 angrenzenden Hälfte bildet der Boden durch leichte Abschrägungen eine trichterförmige Mulde, in deren Mitte sich eine mit einer Schließvorrichtung versehene Öffnung 65 befindet. In der Mulde sind ebenfalls Verwirbelungsdüsen 63 angeordnet. Unter der Öffnung 65 ist eine Auffangvorrichtung 66, z.B. eine gekühlte Platte, für die mit Metallen angereicherte Schmelze angeordnet, an die die Leitung 23 angeschlossen ist. An der der Seitenwand 60 gegenüberliegenden Seitenwand 67 befindet sich eine Öffnung 68 zum Abzug der Restschmelze. Über eine kurze Verbindungsleitung ist die Öffnung 68 mit einem mit Brüdenabzug versehenen Wasserbad 69 verbunden, an dem die Leitung 22 angeschlossen ist.

Zwischen Seitenwand 60 und den Sauerstoffbrennern 61 befinden sich in den beiden längeren Seitenwänden einander gegenüber angeordnete Öffnungen 70, an die Abgaskanäle 71 angeschlossen sind, die über dem Schmelzofen 16 in einen Sammelkanal 72 münden. Vom Sammelkanal 72 führt eine Abgasleitung 73 in den Feuerraum 30 des Kessels 1.

In Figur 2 ist neben den bereits erwähnten Komponenten der Rauchgasreinigungsanlage auch ein Saugzug 74 und ein Kamin 75 dargestellt.

Bei einer Variante des Beispiels 2 ist in der Leitung 19 vom Elektrofilter 2 noch eine Waschanlage zur Entfernung von Metallen, vorzugsweise mit hohem Dampfdruck, aus dem Filterstaub angeordnet.
Statt des Schwingsiebes 40 könnte auch ein Rost mit einer Maschenweite von 30 bis 50 mm verwendet werden.
Statt der Sauerstoffbrenner 61 können auch Luftbrenner eingesetzt werden.

Im Betrieb wird der Abfall durch die Vorrichtung 27 aufgegeben, fällt auf den Walzenrost und wird, während er über die Walzen 28 zum Ascheschacht 29 hin transportiert wird, unter Luftzufuhr verbrannt.

Das dabei entstehende Rauchgas steigt durch den Feuerraum 30 in die Rauchgaszüge 31, durchströmt sie und gelangt durch Rauchgasleitungen 7 zunächst in das Elektrofilter 2, anschließend in die Wäscher 3 und 4, durchströmt den Katalysator 5, das Gewebefilter 6 und verläßt die Abfallverbrennungsanlage durch den Saugzug 74 und 75.
Ein Teil der im Rauchgas mitgerissenen festen Rückstände wird in den Sammelvorrichtungen 33 des Kessels 1 als Kesselasche gesammelt und durch die Förderleitung 34 in den Ascheschacht 29 gefördert.

In den Ascheschacht 29 wird auch die Rostasche gebracht. Sie besteht aus Rostabwurf, der hinter der in Bewegungsrichtung des Abfalls letzten Walze 28 in den Ascheschacht 29 fällt und Rostdurchfall aus den Sammelvorrichtungen 36, der durch die Förderleitung 35 zum Ascheschacht 29 gefördert wird.

Rostasche und Kesselasche gelangen auf das Schwingsieb 40. Durch das Schwingsieb werden Bestandteile mit einem Durchmesser größer als 40 mm aussortiert. Diese Grobfraktion wird zunächst in den Naßentascher 41 und nach Abkühlung zum Magnetabscheider 42 gefördert. Die durch den Magnetabscheider 42 aussortierten Eisenteile gelangen in den Eisenschrott-Container 43, die restliche Grobfraktion wird in der Zerkleinerungsvorrichtung 44 zerkleinert und der Vorrichtung 27 zur Aufgabe des Abfalls zugeführt.

Die vom Grobgut befreite Rost- und Kesselasche wird über die Leitung 18 in den Vorlagebunker 14 gefördert. Außerdem wird der im Elektrofilter 3 aus dem Rauchgas entfernte, ggf. teilweise von Metallen befreite, Filterstaub über die Leitung 19 und das aus dem Gewebefilter 6 stammende beladene Adsorbens über die Leitung 20 sowie Asche und Sand aus dem Wirbelschichtreaktor 48 über die Leitungen 53 und 56 in den Vorlagebunker 14 gefördert. Aus dem Vorlagebunker 14 werden die Rückstände über die Einlegemaschine 15 durch die Öffnungen 59 in den Schmelzraum des Schmelzofens 16 gebracht.

Der Schmelzofen 16 wird durch die z.B. sechs mit Erdgas betriebenen Sauerstoffbrenner 61 direkt beheizt. Das Abgas wird durch die Abgaskanäle 71, den Sammelkanal 72 und die Abgasleitung 73 direkt in den Feuerraum 30 geleitet. Die Rückstände werden bei einer Temperatur um 1400 °C kontinuierlich eingeschmolzen. Ihre Verweilzeit im Schmelzbad beträgt etwa 12 Stunden.

Während des Schmelzens werden der unverbrannte Kohlenstoff und die halogenierten Kohlenwasserstoffe abgebaut. Die entstehende Restschmelze wird an der Oberfläche des Schmelzbades durch die Öffnung 68 abgezogen und im Wasserbad granuliert. Es entsteht eine glasartige, im wesentlichen von ihren unerwünschten Inhaltsstoffen befreite Schlacke, bei der eventuelle restliche Schadstoffe in einer glasartigen Matrix eingebunden sind. Sie eignet sich zur Wiederverwendung im Landschaftsbau und zum Deponieren auf Boden- oder Mineralstoffdeponien. Während des Schmelzens wird das Volumen der Rückstände um etwa 70 bis 80 % verringert.

Die im Schmelzbad aufgeschmolzenen und festen Metalle sinken auf den Boden 64 des Schmelzofens 16. Sie werden in einer mit Metallen angereicherten Schmelze durch die Öffnung 65, ggf. diskontinuierlich, abgezogen, abgekühlt und einer Aufbereitung zugeführt.

Das erfindungsgemäße Behandeln der Rückstände ermöglicht ein nahezu rückstandsfreies Betreiben einer Abfallverbrennungsanlage durch die Erzeugung folgender wiederverwertbarer Produkte: neben Gips, Salzsäure und Quecksilber auch Eisenschrott, Metallschlacke und glasartige Schlacke.

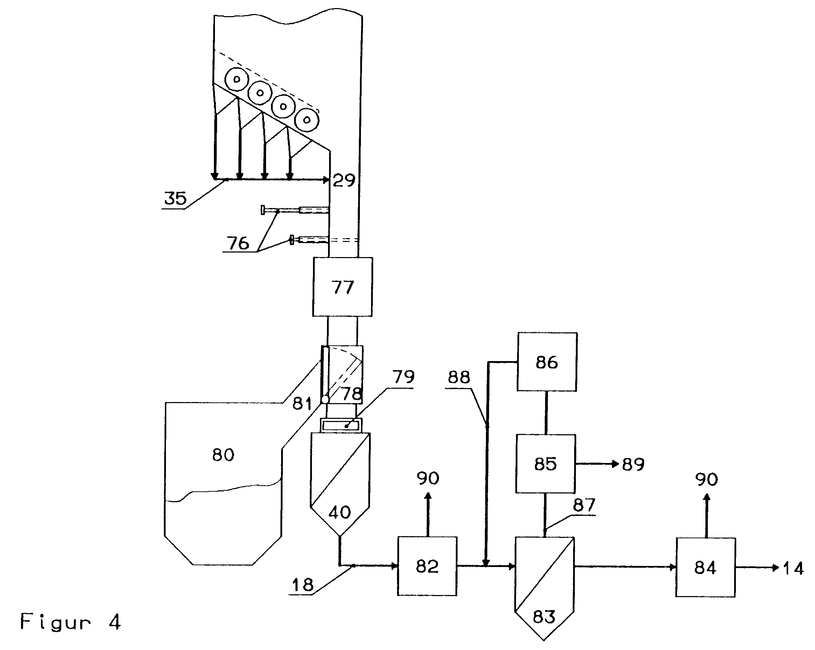

### Beispiel 3 (Figur 4)

Die Abfallverbrennungsanlage des Beispiels 3 unterscheidet sich von der des Beispiels 2 in folgenden Punkten:

Ein im Ascheschacht 29 unterhalb der Förderleitung 35 angeordnetes Schleusensystem weist zwei übereinander angeordnete Absperrschieber 76 auf. Im geschlossenen Zustand bedecken die Absperrschieber 76 jeweils den gesamten Querschnitt des Ascheschachtes 29 und schließen ihn gasdicht ab. Im in Figur 4 dargestellten Fall ist der obere Absperrschieber 76 geöffnet und der untere geschlossen.

Unterhalb des Schleusensystems befindet sich im Ascheschacht 29 ein trockener Entascher 77. Unterhalb des Entaschers 77 mündet der Ascheschacht 29 in einer Vorrichtung 78 mit einer Umleitschurre, an die ein zu dem Schwingsieb 40 führende Fördervorrichtung, z.B. ein Plattenband 79, und eine zu einem trockenen Aschebunker 80 führende Fördervorrichtung 81 angeschlossen sind. Der Aschebunker 80 kann auch direkt am Ascheschacht 29 angeordnet sein, so daß eine Fördervorrichtung nicht benötigt wird.

Um die Qualität der in den Schmelzofen 16 geförderten Schlacke zu verbessern, kann in der vom Feingutausgang des Schwingsiebes 40 ausgehenden, zum Vorlagebunker 14 führenden Leitung 18 eine weitere Aufbereitungsvorrichtung angeordnet sein.

Eine solche Aufbereitungsvorrichtung besteht beispielsweise aus einem Magnetscheider 82, einem Sieb 83, z.B. einem Schwingsieb mit einer Maschenweite von 2 bis 8 mm, einem weiteren Magnetscheider 84, einem Wirbelstromscheider 85 und einer Zerkleinerungsvorrichtung 86, z.B. einer Prallmühle.

Dabei sind der Magnetscheider 82, das Sieb 83 und der zweite Magnetscheider 84 hintereinander in der Leitung 18, die z.B. Förderbänder aufweist, angeordnet. Ein Grobgutausgang des Siebes 83 ist durch eine Fördervorrichtung 87 über den Wirbelstromscheider 85 mit der Zerkleinerungsvorrichtung 86 verbunden. Eine am Ausgang der Zerkleinerungsvorrichtung 86 befindlichen weitere Fördervorrichtung 88 mündet zwischen Magnetscheider 82 und Sieb 83 in die Leitung 18. Der Wirbelstromscheider 85 ist mit einem Container 89 für die abgetrennten Nichteisenmetalle und die Magnetscheider 82 und 84 mit einem Fe-Container 90 verbunden.

Im Betrieb ist die Umleitschurre der Vorrichtung 78 geöffnet. Die Rückstände gelangen über das Schleusensystem mit den Absperrschiebern 76 durch den trockenen Entascher 77 und über das Plattenband 79 auf das Schwingsieb 40. Aus den vom Grobgut befreiten Rückständen wird im Magnetscheider 82 Eisenschrott entfernt und in einen Fe-Container 90 transportiert.

Aus dem im folgenden Sieb 83 aussortierten Grobgut werden im Wirbelstromscheider 85 die Nichteisenmetalle aussortiert. Das restliche Grobgut wird in der Zerkleinerungsvorrichtung 86 zerkleinert und der Schlacke vor dem Sieb 83 zugeführt.

Das aus dem Sieb 83 kommende Feingut durchläuft den weiteren Magnetscheider 84, in dem Eisenschrott abgetrennt wird. Dieser Eisenschrott wird ebenfalls in den Fe-Container 90 gefördert. Auch die aussortierten Nichteisenmetalle werden in einen Container 89 gefördert.

Bei einer Verbrennungsanlage mit einem Naßentascher muß in der Leitung 18 zusätzlich ein Trockner, und zwar hinter dem Magnetscheider 82 vor der Mündung der Fördervorrichtung 88, angeordnet sein.

## Patentansprüche

1. Verfahren zum Behandeln von Rückständen einer Abfallverbrennungsanlage, bestehend aus Rostasche, Kesselasche und Filterstaub, wobei die Rückstände über einen Vorlagebunker (14) in einen Schmelzofen (16) gefördert und unter Zufuhr von Energie geschmolzen werden, wobei oberhalb des Schmelzbades eine um 100° bis 300° höhere Temperatur als im Schmelzbad eingestellt wird und eine mit Metallen angereicherte Schmelze (23) und eine Restschmelze (22) getrennt abgezogen und abgekühlt werden, dadurch gekennzeichnet, daß
- die Rostasche (18) in eine Grob- und eine Feinfraktion aufgeteilt wird,
- die Grobfraktion der Rostasche nach Entfernung von Eisenschrott zerkleinert und
- in den Kessel (1) der Abfallverbrennungsanlage zurückgeführt wird,
- die Feinfraktion der Rostasche mit einer Korngröße von höchstens 50 mm in Magnetabscheidern und Wirbelstromabscheidern von Eisen und Nichteisenmetallen befreit wird,
- der nichtmetallische Teil der Feinfraktion der Rostasche (18) zusammen mit der Kesselasche und dem Filterstaub dem Schmelzofen (16) aufgegeben, wobei
- dem unteren Teil des Schmelzbades Luft zur Verwirbelung zugefügt wird.

2. Verfahren nach Anspruch 1, dadurch gekennzeichnet, daß die mit Metallen angereicherte Schmelze diskontinuierlich und die Restschmelze kontinuierlich abgezogen wird.

3. Verfahren nach Anspruch 1 oder 2, dadurch gekennzeichnet, daß in dem Schmelzbad eine Temperatur von 1100 bis 1500 °C eingestellt wird.

4. Verfahren nach Anspruch 3, dadurch gekennzeichnet, daß der untere Teil des Schmelzbades zusätzlich erwärmt wird.

5. Verfahren nach Anspruch 1, dadurch gekennzeichnet, daß der maximale Korndurchmesser der Feinfraktion auf 30 bis 50 mm eingestellt wird.

6. Verfahren nach Anspruch 1, dadurch gekennzeichnet, daß aus dem Filterstaub zunächst teilweise Metalle, vorwiegend mit hohem Dampfdruck, entfernt werden, bevor er mit den anderen Rückständen eingeschmolzen wird.

7. Verfahren nach Anspruch 1, dadurch gekennzeichnet, daß neben trockenen Rückständen auch feuchte Rückstände, z. B. Rückstände einer Anwasseraufbereitung der Abfallverbrennungsanlage, mit eingeschmolzen werden.

8. Verfahren nach einem der Ansprüche 1 bis 7, dadurch gekennzeichnet, daß auch glasbildende Rückstände, wie Altglas oder Sand, mit eingeschmolzen werden.

9. Abfallverbrennungsanlage mit einem Kessel, einer Rauchgasreinigungsanlage und einer Vorrichtung zum Behandeln von Rückständen zur Durchführung eines Verfahrens nach einem der Ansprüche 1 bis 8 mit einem separaten Schmelzofen (16), der eine Öffnung (65) zum Abzug einer mit Metallen angereicherten Schmelze und eine Öffnung (68) zum Abzug einer Restschmelze aufweist, dadurch gekennzeichnet, daß der Kessel (1) mit einem Ascheschacht (29) versehen ist, der mit einem Sieb (40) verbunden ist, daß der Feingutausgang des Siebes (40) über eine Leitung (18) mit einem Vorlagebunker (14) verbunden ist, daß in der zu dem Vorlagebunker (14) führenden Leitung (18) ein oder mehrere Magnetabscheider (82, 84) zur Abtrennung von Eisen und ein Wirbelstromabscheider (85) zur Abtrennung von Nichteisenmetallen angeordnet ist, daß der Vorlagebunker (14) mit dem Schmelzofen (16) verbunden ist, daß der Schmelzofen (16) als einteiliger Wannenschmelzofen ausgebildet ist, daß im oberen Drittel des Schmelzofens (16) Brenner (61) einander gegenüber angeordnet sind und daß in dem unteren Teil des Schmelzraumes des Schmelzofens (16) Verwirbelungsdüsen (63) angebracht sind.

10. Abfallverbrennungsanlage nach Anspruch 9, dadurch gekennzeichnet, daß die Brenner (61) mit Erdgas betriebene Gas/Sauerstoffbrenner sind.

11. Abfallverbrennungsanlage nach Anspruch 10, dadurch gekennzeichnet, daß im unteren Teil des Schmelzraumes des Schmelzofens (16) eine elektrische Zusatzheizung installiert ist.

12. Abfallverbrennungsanlage nach Anspruch 11, dadurch gekennzeichnet, daß mehrere Elektroden (62) in den unteren Bereich des Schmelzraumes ragen.

13. Abfallverbrennungsanlage nach Anspruch 9, dadurch gekennzeichnet, daß das Sieb (40) als Schwingsieb mit einer Durchlässigkeit von 30 bis 50 mm ausgebildet ist.

14. Abfallverbrennungsanlage nach Anspruch 9, dadurch gekennzeichnet, daß der Vorlagebunker (14) mit einer Einlegemaschine (15) verbunden ist, die mindestens einen von dem Vorlagebunker (14) ausgehenden, mit dem Schmelzofen (16) verbundenen, wassergekühlten Einlegetisch aufweist.

15. Abfallverbrennungsanlage nach einem der Ansprüche 9 bis 14, dadurch gekennzeichnet, daß im Ascheschacht (29) ein Schleusensystem mit zwei übereinander angeordneten, gasdichten Absperrschiebern (76) angeordnet ist.

16. Abfallverbrennungsanlage nach einem der Ansprüche 9 bis 15, dadurch gekennzeichnet, daß auf Höhe einer zu einem trockenen Entascher (38) führenden Abzweigung vom Ascheschacht 29 eine Umleitschurre (39) angebracht ist.

17. Abfallverbrennungsanlage nach einem der Ansprüche 9 bis 16, dadurch gekennzeichnet, daß hinter einem trockenen Entascher (78) eine Vorrichtung (79) mit einer Umleitschurre angeordnet ist.

## Claims

1. Method for the treatment of residues of a refuse incineration plant, which consist of grate ash, boiler ash and filter dust, wherein the residues are conveyed by way of a receiving bunker (14) into a melting furnace (16) and molten whilst being supplied with energy, wherein a temperature is set above the melt bath, which is higher by 100° to 300° than in the melt bath and a melt (23) enriched with metals and a residual melt (22) are drawn off separately and cooled down, characterised thereby, that
- the grate ash (18) is divided up into a coarse and a fine fraction,
- the coarse fraction of the grate ash is comminuted after removal of iron scrap and
- guided back into the boiler (1) of the refuse incineration plant,
- the fine fraction of the grate ash is freed from iron and non-ferrous metals to a grain size of at most 50 millimetres in magnetic separators and eddy current separators and
- the non-metallic part of the fine fraction of the grate ash (18) together with the boiler ash and the filter dust is charged into the melting furnace (16), wherein
- air for creation of turbulence is added to the lower part of the melt bath.

2. Method according to claim 1, characterised thereby, that the melt enriched with metals is drawn off discontinuously and residual melt is drawn off continuously.

3. Method according to claim 1 or 2, characterised thereby, that a temperature of 1100 to 1500°C is set in the melt bath.

4. Method according to claim 3, characterised thereby, that the lower part of the melt bath is heated additionally.

5. Method according to claim 1, characterised thereby, that the maximum grain diameter of the fine fraction is set to 30 to 50 millimetres.

6. Method according to claim 1, characterised thereby, that metals are initially removed partially, predominantly at high steam pressure, from the filter dust before it is melted in with the other residues.

7. Method according to claim 1, characterised thereby, that apart from dry residues, also moist residues, for example residues of a waste water preparation of the refuse incineration plant, are also melted in.

8. Method according to one of the claims 1 to 7, characterised thereby, that vitreous residues, such as old glass or sand, are also molten in.

9. Refuse incineration plant with a boiler, a flue gas cleaning plant and a device for the treatment of residues for the performance of a method according to one of the claims 1 to 8, with a separate melting furnace (16), which has an opening (65) for the extraction of a melt enriched by metals and an opening (68) for the extraction of a residual melt, characterised thereby, that the boiler (1) is provided with an ash shaft (29), which is connected with a sieve (40), that the fine stock exit of the sieve (40) is connected by way of a duct (18) with a receiving bunker (14), that one or more magnetic separators (82, 84) for the separation of iron and an eddy current separator (85) for the separation of non-ferrous metals are arranged in the duct (18) leading to the receiving bunker (14), that the receiving bunker (14) is connected with the melting furnace (16), that the melting furnace (16) is constructed as one-piece trough melting furnace, that burners (61) are arranged one opposite the other in the upper third of the melting furnace (16) and that turbulence-causing nozzles (63) are introduced in the lower part of the melting chamber of the melting furnace (16).

10. Refuse incineration plant according to claim 9, characterised thereby, that the burners (61) are gas or oxygen burners operated with natural gas.

11. Refuse incineration plant according to claim 10, characterised thereby, that an additional electrical heating is installed in the lower part of the melting chamber of the melting furnace (16).

12. Refuse incineration plant according to claim 11, characterised thereby, that several electrodes (62) project into the lower part of the melting chamber.

13. Refuse incineration plant according to claim 9, characterised thereby, that the sieve (40) is constructed as vibratory sieve with a perviousness of 30 to 50 millimetres.

14. Refuse incineration plant according to claim 9, characterised thereby, that the receiving bunker (14) is connected with a charging machine (15), which comprises at least one water-cooling charging table starting out from the receiving bunker (14) and connected with the melting furnace (16).

15. Refuse incineration plant according to one of the claims 9 to 14, characterised thereby, that a sluice system with two gas-tight shut-off slides (76), which are arranged one above the other, is arranged in the ash shaft (29).

16. Refuse incineration plant according to one of the claims 9 to 15, characterised thereby, that a diversion chute (39) is mounted at the height of a branch which leads from the ash shaft (29) to a dry ash remover (38).

17. Refuse incineration plant according to one of the claims 9 to 16, characterised thereby, that a device (79) with a diversion chute is arranged behind a dry ash remover (78).

## Revendications

1. Procédé de traitement de résidus d'une installation d'incinération de déchets, constitués de cendres de grille, de cendres de chaudière et de poussière de filtrage, les résidus étant transportés, par l'intermédiaire d'une trémie de collecte (14), dans un four de fusion (16) et fondus par apport d'énergie, au-dessus du bain en fusion a une température de 100° à 300° supérieure à celle régnant dans le bain en fusion et une masse en fusion enrichie en métaux (23) et une masse en fusion de résidus (22) étant extraites de façon séparée et refroidies, caractérisé en ce que
- les cendres de grille (18) sont réparties en une fraction grossière et une fraction fine,
- la fraction grossière des cendres de grille est broyée après enlèvement des déchets de fer, et
- recyclée dans la chaudière (1) de l'installation d'incinération de déchets,
- la fraction fine des cendres de grille, ayant une taille de grains maximale de 50 mm, est débarrassée dans des séparateurs magnétiques et des séparateurs à courant tourbillonnaire, du fer et des métaux non ferreux,
- la partie non métallique de la fraction fine des cendres de grille (18) est fournie au four de fusion (16), conjointement avec la cendre de chaudière et la poussière de filtrage, où
- de l'air est ajouté à la partie inférieure du bain en fusion afin de produire un tourbillonnement.

2. Procédé selon la revendication 1, caractérisé en ce que le bain en fusion enrichi en métaux est extrait de façon discontinue et la masse en fusion des résidus est extraite de façon continue.

3. Procédé selon la revendication 1 ou 2, caractérisé en ce qu'une température de 1100 à 1500 °C est réglée dans le bain en fusion.

4. Procédé selon la revendication 3, caractérisé en ce que la partie inférieure du bain en fusion est en plus soumise à un chauffage.

5. Procédé selon la revendication 1, caractérisé en ce que le diamètre de grains maximal de la fraction fine est réglé à 30 à 50 mm.

6. Procédé selon la revendication 1, caractérisé en ce que, à partir de la poussière de filtrage, on enlève d'abord partiellement les matériaux, principalement ceux ayant une pression de vapeur élevée, avant de réaliser la mise en fusion avec les autres résidus.

7. Procédé selon la revendication 1, caractérisé en ce que, outre des résidus secs, sont également mis en fusion conjointement des résidus humides, par exemple des résidus venant d'une préparation d'eaux usées appartenant à l'installation d'incinération des déchets.

8. Procédé selon l'une des revendications 1 à 7, caractérisé en ce que des résidus formant du verre, tels que du vieux verre ou du sable, sont fondus conjointement.

9. Installation d'incinération de déchets comportant une chaudière, une installation d'épuration des gaz de fumée et un dispositif de traitement des résidus, pour mettre en oeuvre un procédé selon l'une des revendications 1 à 8, avec un four de fusion séparé (16) qui présente une ouverture (65) destinée à l'extraction d'une masse en fusion enrichie avec des métaux et une ouverture (68) destinée à l'extraction d'une masse en fusion constituée par les résidus, caractérisée en ce que la chaudière (1) est pourvue d'un puits à cendres (29) relié à un tamis (40), en ce que la sortie de produit fin du tamis (40) est reliée par une conduite (18) à une trémie de collecte (14), en ce que, dans la conduite (18) menant à la trémie de collecte (14), sont disposés un ou plusieurs séparateurs magnétiques (82, 84) destinés à assurer la séparation du fer et un séparateur à courant tourbillonnaire (85) destiné à assurer la séparation des métaux non ferreux, en ce que la trémie de collecte (14) est reliée au four de fusion (16), en ce que le four de fusion (16) est réalisé sous forme de four de fusion à cuve ou bassin réalisé d'une seule pièce, en ce que dans le tiers supérieur du four de fusion (16) sont disposés les uns en face des autres des brûleurs (61) et en ce que dans la partie inférieure de l'espace de fusion du four de fusion (16) sont montées des buses de tourbillonnement (63).

10. Installation d'incinération de déchets selon la revendication 9, caractérisée en ce que les brûleurs (61) sont des brûleurs à gaz/oxygène fonctionnant au gaz naturel.

11. Installation d'incinération de déchets selon la revendication 10, caractérisée en ce qu'un chauffage additionnel électrique est installé dans la partie inférieure de l'espace de fusion du four de fusion (16).

12. Installation d'incinération de déchets selon la revendication 11, caractérisée en ce que plusieurs électrodes (62) pénètrent dans la zone inférieure de l'espace de fusion.

13. Installation d'incinération de déchets selon la revendication 9, caractérisée en ce que le tamis (40) est réalisé sous forme de tamis vibrant, ayant une perméabilité de 30 à 50 mm.

14. Installation d'incinération de déchets selon la revendication 9, caractérisée en ce que la trémie de collecte (14) est reliée à une machine d'introduction (15) qui présente au moins une table d'introduction refroidie à l'eau, partant de la trémie de collecte (14), reliée au four de fusion (16).

15. Installation d'incinération de déchets selon l'une des revendications 9 à 14, caractérisée en ce qu'un système à puits comportant deux registres d'isolement (76) étanches au gaz, disposés l'un au-dessus de l'autre est disposé dans le puits à cendres (29).

16. Installation d'incinération de déchets selon l'une des revendications 9 à 15, caractérisée en ce que, au niveau d'une ramification, menant à un décendreur sec (38) et partant du puits à cendres (29), est montée une goulotte de dérivation (39).

17. Installation d'incinération de déchets selon l'une des revendications 9 à 16, caractérisée en ce que derrière un décendreur sec (78) est disposé un dispositif (79) équipé d'une goulotte de dérivation.
